(19) Europäisches Patentamt / European Patent Office / Office européen des brevets

(11) **EP 2 188 886 B1**

## (12) EUROPÄISCHE PATENTSCHRIFT

(45) Veröffentlichungstag und Bekanntmachung des Hinweises auf die Patenterteilung:
**02.05.2012 Patentblatt 2012/18**

(21) Anmeldenummer: **08787382.4**

(22) Anmeldetag: **21.08.2008**

(51) Int Cl.:
***H02M 3/158*** *(2006.01)*

(86) Internationale Anmeldenummer:
**PCT/EP2008/060938**

(87) Internationale Veröffentlichungsnummer:
**WO 2009/033924 (19.03.2009 Gazette 2009/12)**

(54) **VERFAHREN ZUR REGELUNG EINES SCHALTWANDLERS**

METHOD FOR REGULATING A DC-TO-DC CONVERTER

PROCÉDÉ DE RÉGULATION D'UN CONVERTISSEUR À COMMUTATION

(84) Benannte Vertragsstaaten:
**AT BE BG CH CY CZ DE DK EE ES FI FR GB GR HR HU IE IS IT LI LT LU LV MC MT NL NO PL PT RO SE SI SK TR**

(30) Priorität: **11.09.2007 AT 14182007**

(43) Veröffentlichungstag der Anmeldung:
**26.05.2010 Patentblatt 2010/21**

(73) Patentinhaber: **SIEMENS AKTIENGESELLSCHAFT 80333 München (DE)**

(72) Erfinder: **HALLAK, Jalal A-1220 Wien (AT)**

(74) Vertreter: **Maier, Daniel Oliver Siemens AG Postfach 22 16 34 80506 München (DE)**

(56) Entgegenhaltungen:
**EP-A- 1 361 649    US-A- 6 037 755
US-A- 6 166 527    US-A1- 2005 007 089**

**Beschreibung**

Die Erfindung betrifft ein Verfahren zur Regelung eines Tief-Hochsetzstellers oder Hoch-Tiefsetzstellers, wobei mittels eines ersten pulsweitenmodulierten Schaltsignals ein erstes Schaltelement als ein Bauteil des Tiefsetzstellers angesteuert wird und wobei mittels eines zweiten pulsweitenmodulierten Schaltsignals ein zweites Schaltelement als ein Bauteil des Hochsetzstellers angesteuert wird, sodass eine Eingangsspannung in eine Ausgangsspannung umgewandelt wird, wobei sich die Verläufe der Eingangspannung und der Ausgangspannung laufend einander annähern oder überschneiden. Des Weiteren betrifft die Erfindung einen Tief-Hochsetzsteller oder Hoch-Tiefsetzsteller zur Durchführung des Verfahrens.

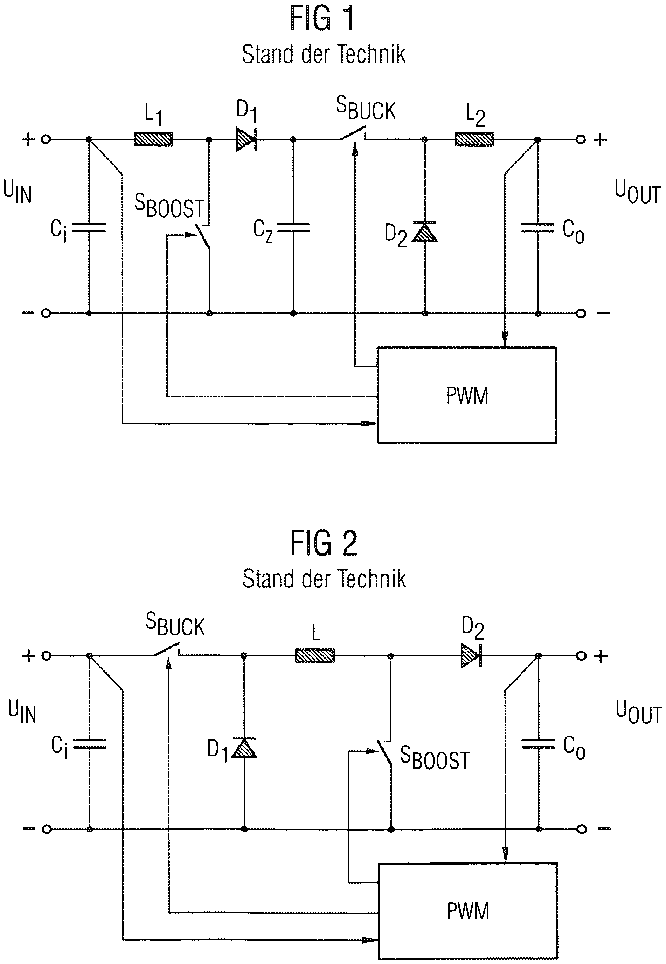

Sogenannte Hoch-Tiefsetzsteller sind seit langem bekannt. Dabei handelt es sich im Wesentlichen um Schaltwandler, die abwechselnd oder in einem Übergangsbereich gleichzeitig nach der Art eines Hochsetzstellers und nach der Art eines Tiefsetzstellers arbeiten. In einer entsprechenden Schaltungsanordnung sind zumeist eine gemeinsame Drossel(im Fall eines Tief-Hochsetzstellers) sowie ein gemeinsamer Eingangsfilter und ein gemeinsamer Ausgangsfilter vorgesehen. Die übrigen Bauteile des Hochsetzstellers, zumeist eine Diode und ein Schaltelement, sind vom Anschluss der Eingangsspannung aus betrachtet entweder vor (vgl. Fig. 1 Hoch-Tiefsetzstellers) oder nach (vgl. Fig. 2 Tief-Hochsetzsteller) den übrigen Bauteilen des Tiefsetzsteller angeordnet.

Hoch-Tiefsetzsteller werden in der Regel zur sogenannten Leistungsfaktor-Korrektur bzw. Power Factor Correction (PFC) von Schaltnetzteilen verwendet. Ein Verfahren zur Leistungsfaktor-Korrektur mittels Hochsetzsteller und nachschaltbarem Tiefsetzsteller ist beispielsweise in der WO1998009368 angegeben.

Bekannte Anordnungen mit Hochsetzsteller und Tiefsetzsteller zur Umwandlung einer gleichgerichteten höheren Wechselspannung in eine niedrigere Gleichspannung mit Leistungsfaktor-Korrektur können auch in umgekehrter Weise angewendet werden. Dabei wird beispielsweise eine niedrige Gleichspannung einer alternativen Gleichspannungsquelle in eine pulsierende höhere Gleichspannung umwandelt, wobei der Maximalwert der Ausgangsspannung über und der Minimalwert der Ausgangsspannung unter dem Eingangsspannungswert liegt.

Bei einem derartigen Verfahren sind der Tiefsetzsteller und der Hochsetzsteller während einer Periode abwechselnd aktiv. In den Abschnitten, in denen die pulsierende Ausgangsgleichspannung unter der Eingangsspannung liegt, ist der Tiefsetzsteller aktiv und in den Abschnitten, in denen die pulsierende Ausgangsgleichspannung über der Eingangsspannung liegt, ist der Hochsetzsteller aktiv.

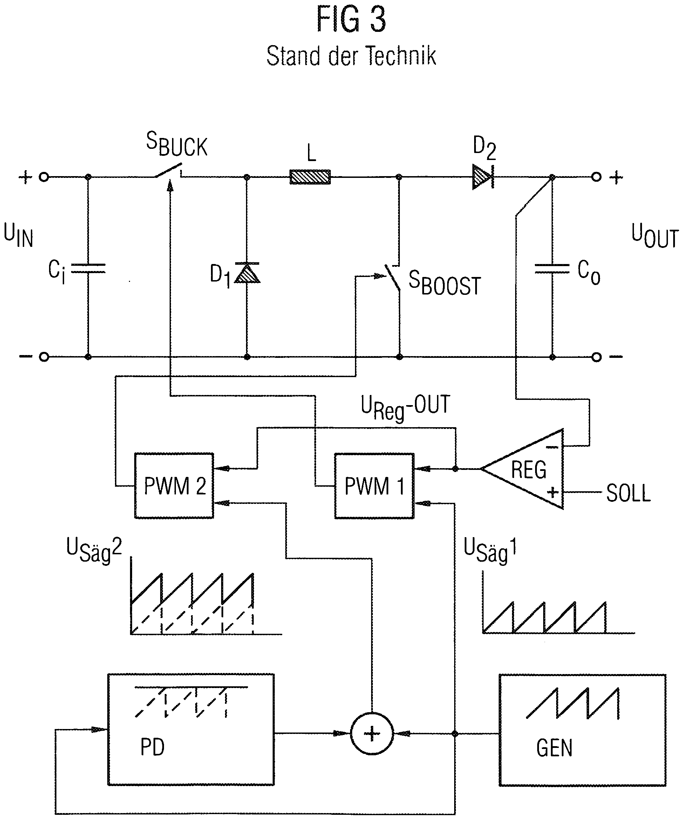

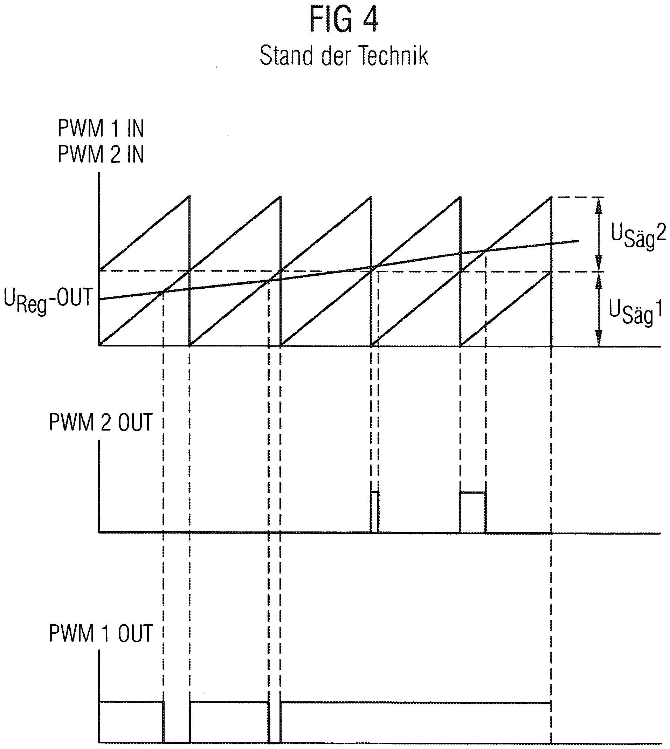

Ein Verfahren zur Ansteuerung eines Hoch-Tiefsetzstellers mit einer um eine Eingangsspannung oszillierende Ausgangsspannung ist beispielsweise in der Offenlegungsschrift DE 10 2005 030 599 A1 angegeben. Dabei werden zwei pulsweitenmodulierte Schaltsignale zur Ansteuerung der Schaltelemente eines als Tief-Hochsetzsteller oder Hoch-Tiefsetzsteller ausgebildeten Wandlers aus der Überlagerung zweier synchroner Sägezahnsignale mit einem Reglerausgangssignal abgeleitet (vgl. Fig. 3). Ein Sägezahnsignal ist dabei gegenüber dem zweiten Sägezahnsignal um einen Wert gleich der Amplitude verschoben. Damit beträgt bei steigendem Reglerausgangssignal das Tastverhältnis des ersten pulsweitenmodulierten Schaltsignals zur Ansteuerung des Tiefsetzstellers 100% Prozent, bevor das zweite Schaltsignal dem Hochsetzsteller erste Schaltimpulse liefert (vgl. Fig. 4).

In der Patentschrift DE 43 06 070 C1 ist ebenso ein Hoch-Tiefsetzsteller offenbart, wobei mit nur einem Reglerausgangssignal zwei pulsweitenmodulierte Signale erzeugt werden.

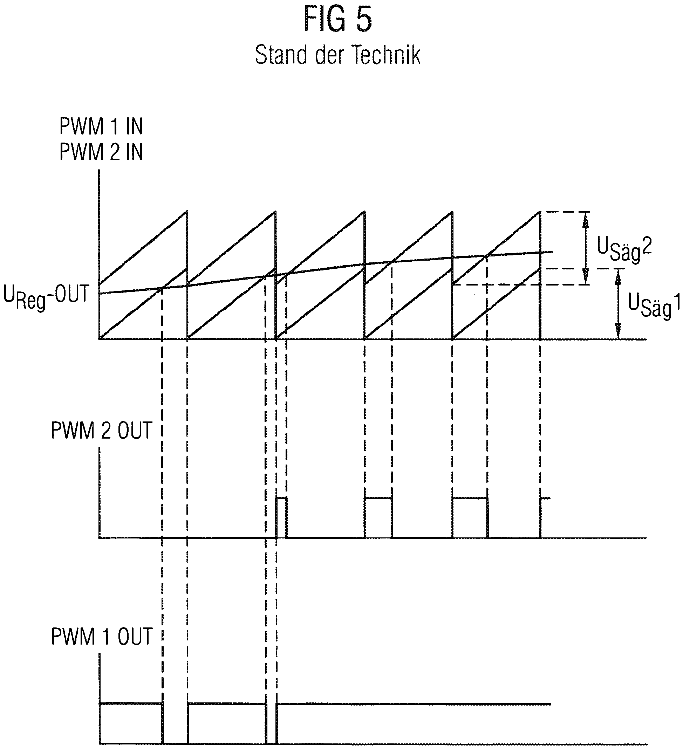

Um Spannungsabfälle in den Bauelementen des Schaltwandlers zu kompensieren, kennt man auch Verfahren, bei welchen die beiden Sägezahnsignale um einen Wert gleich der Amplitude abzüglich eines Korrekturwertes verschoben werden (vgl. Fig. 5). Eine derartige Überlagerung der Sägezahnsignale zur Realisierung eines überschneidenden Betriebs des Hoch- und Tiefsetzstellers ist zudem aus der US 6 166 527 A bekannt.

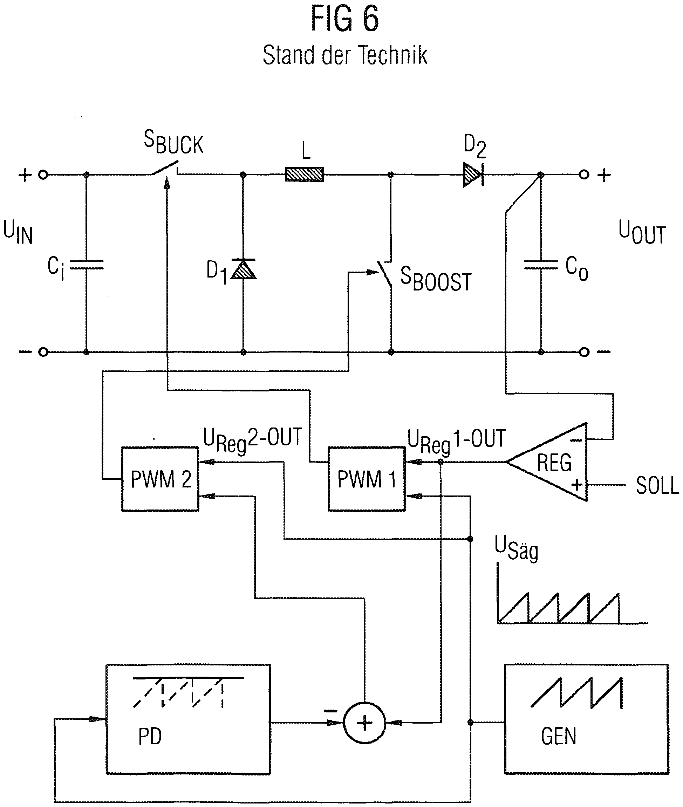

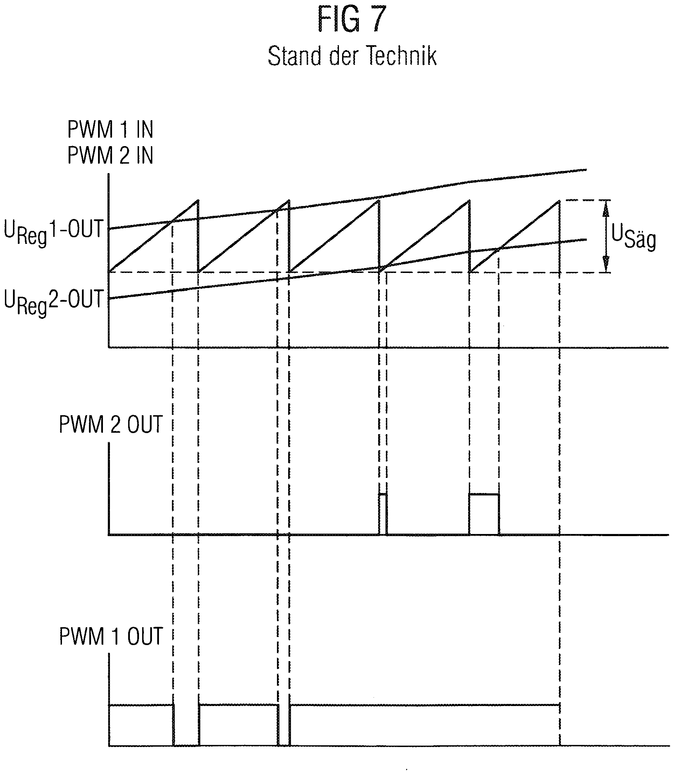

Des Weiteren kennt man Verfahren, bei welchen zur Erzeugung der pulsweitenmodulierten Schaltsignale nur ein Sägezahnsignal mit zwei Reglerausgangssignalen überlagert wird. Das zweite Reglerausgangssignal wird dabei aus dem ersten Reglerausgangssignal zuzüglich eines Amplitudenwertes des Sägezahnsignals bebildet (vg. Fig. 6 und 7).

Die bekannten Verfahren sind für Schaltwandler mit geregelter, nahezu konstanter Ausgangsspannung und einem entsprechend langsamen Regler einfach anwendbar. Bei schwankender Eingangsspannung sind jedoch die Übergänge zwischen aktivem Tief- und Hochsetzsteller kritisch. In der Regel werden dabei auftretende Unregelmäßigkeiten mittels einer ausreichend großen Ausgangsfilterkapazität gedämpft.

Die US 2005/007089 A1 offenbart ein Verfahren, mit dem ebenfalls Störungen infolge einer schwankenden Eingangsspannung reduziert werden. Dabei ist ein Steuerungsbereich vorgesehen, während dem ein überlappender Übergang zwischen Hochsetzerbetrieb und Tiefsetzerbetrieb erfolgt. Ein solcher übergangsbereich zwischen Hochsetzerbetrieb und Tiefsetzerbetrieb ist auch in der US 6,037,755 A vorgesehen.

Auch die EP 1 361 649 A1 offenbart ein Verfahren, bei dem in einem übergangsbereich sowohl ein Hochsetzstellermodus als auch ein Tiefsetzstellermodus vorgesehen sind. In diesem Bereich überlagern zwei Reglerausgangssignale ein Sägezahnsignal, wodurch sich zwei pulsweitmodulierte Schaltsignale ergeben.

Problematisch ist der Betrieb eines bekannten Hoch-Tiefsetzsteller als Stromquelle, etwa als Bestandteil eines Wechselrichters zur Stromeinspeisung aus einer alternativen Stromquelle in ein Wechselstromnetz. In diesem Fall wird nicht die Ausgangsspannung, sondern der eingespeiste Strom geregelt. Der als Netzfilter ausgebildete Ausgangsfilter weist eine geringe Ausgangskapazität auf, weshalb Unregelmäßigkeiten beim Übergang der Betriebsarten nicht gedämpft werden. Zudem erfordert die Stromeinspeisung in ein öffentliches stromnetz eine netzsynchrone Regelung des sinusförmigen Stromes und somit einen entsprechend schnellen Regler. Ein solcher Regler erzeugt ein Reglerausgangssignal, das bei den bekannten Verfahren zur Erzeugung zweier pulsweitenmodulierter Schaltsignale bei jedem Übergang vom Tiefsetzsteller- zum Hochsetzstellerbetrieb zu unerwünschten Störungen des eingespeisten Stromes führt.

Der Erfindung liegt die Aufgabe zugrunde, für ein Verfahren der eingangs genannten Art eine Verbesserung gegenüber dem Stand der Technik anzugeben. Es ist weiters eine Aufgabe der Erfindung, einen Schaltwandler zur Durchführung des verbesserten Verfahrens anzugeben.

Erfindungsgemäß wird diese Aufgabe gelöst durch ein Verfahren zur Regelung eines Tief-Hochsetzstellers oder Hoch-Tiefsetzstellers, wobei mittels eines ersten pulsweitenmodulierten Schaltsignals ein erstes Schaltelement als ein Bauteil des Tiefsetzstellers angesteuert wird und wobei mittels eines zweiten pulsweitenmodulierten Schaltsignals ein zweites Schaltelement als ein Bauteil des Hochsetzstellers angesteuert wird, sodass eine Eingangsspannung in eine Ausgangsspannung umgewandelt wird, wobei sich die Verläufe der Eingangspannung und der Ausgangsspannung laufend einander annähern oder überschneiden. Dabei wird dem zweiten pulsweite modulierten Schaltsignal bei einer Annäherung der Ausgangsspannung an die größere Eingangsspannung ein synchrones drittes pulsweitenmoduliertes Schaltsignal mit einem aus der Differenz zwischen Eingangsspannung und Ausgangsspannung abgeleiteten, ansteigenden Tastverhältnis in der Weise überlagert, dass das zweite Schaltelement bereits zu takten beginnt, wenn das erste Schaltelement noch taktet und das zweite pulsweitenmodulierte Schaltsignal noch ein Tastverhältnis gleich null aufweist. Dabei ist der Verlauf der Eingangsspannung und/oder der Ausgangsspannung oszillierend.

Auf diese Weise wird bei jedem Übergang vom Tiefsetzstellerzum Hochsetzstellerbetrieb und umgekehrt sichergestellt, dass das Schaltelement des Hochsetzstellers bereits mit sehr kurzen Einschaltzeiten zu takten beginnt, wenn sich die Ausgangsspannung an die Eingangsspannung annähert. Dies geschieht unabhängig vom Verlauf des zweiten pulsweitenmodulierten Signals, welches in der Regel durch Überlagerung eines Sägezahn- oder Dreiecksignals mit einem Reglerausgangssignal erzeugt wird. Diese Maßnahme führt dazu, dass der Verlauf des Stromes in einer Speicherdrossel des Tief-Hochsetzstellers oder Hoch-Tiefsetzstellers in den Übergangsphasen vom Tiefsetzsteller- zum Hochsetzstellerbetrieb kontinuierlich verläuft. Es ist also nicht mehr notwendig, einen Ausgangsfilter mit hoher Kapazität zur Glättung von Störungen vorzusehen. Ein Vorteil der Erfindung liegt demnach darin, dass damit ein Tief-Hochsetzsteller oder Hoch-Tiefsetzsteller auch als Stromquelle störungsfrei arbeitet, beispielsweise als Bestandteil eines Wechselrichters zu Stromeinspeisung aus einer alternativen Stromquelle in ein Wechselstromnetz.

In einer vorteilhaften Ausprägung des Verfahrens ist vorgesehen, dass das erste und das zweite pulsweitenmodulierte Schaltsignal durch zwei gegeneinander versetzte Überlagerungen eines Sägezahn- oder Dreiecsignals mit einem Reglerausgangssignal erzeugt werden und dass das dritte pulsweitenmodulierte Schaltsignal durch Überlagerung des Sägezahn- oder Dreiecksignals mit einem Ausgangssignal eines Übergangskontrollers erzeugt wird. Die Erzeugung der drei pulsweitenmodulierten Signale erfolgt somit in einfacher Weise mit nur einem Sägezahn- oder Dreieckssignal, wobei zur Erzeugung des ersten und zweiten pulsweitenmodulierten Schaltsignals auch nur ein Reglerausgangssignal erforderlich ist. Es ist also nur ein Regler und ein Signalgenerator notwendig.

Dabei ist es von Vorteil, wenn das Ausgangssignal des Übergangskontrollers in der Weise vorgegeben wird, dass das Tastverhältnis des dritten pulsweitenmodulierten Schaltsignals in Abhängigkeit der Differenz der Eingangsspannung abzüglich der Ausgangsspannung bei abfallender Differenz ab Erreichung eines vorgegeben Grenzwertes der Differenz gleichmäßig ansteigt, bis bei einer Differenz gleich null ein vorgegebenes maximales Tastverhältnis erreicht wird und dass bei einer negativen Differenz das Tastverhältnis des dritten pulsweitenmodulierten Schaltsignals konstant bleibt.

Zur Erzeugung des Ausgangssignals des Übergangskontrollers wird also zunächst die Differenzspannung zwischen Ausgangsspannung und Eingangsspannung ermittelt und eine Grenzwertspannung vorgegeben. Das Ausgangssignal des Übergangskontrollers ergibt sich dann in einfacher Weise aus der Grenzwertspannung abzüglich der Differenzspannung, wobei zur Erreichung des vorgegeben Tastverhältnisses eine entsprechende Verstärkung gewählt wird. Die Ermittlung der Differenzspannung ist dabei nur in den Phasen notwendig, in welchen die Ausgangsspannung geringer als die Eingangsspannung ist.

Da das dritte pulsweitenmodulierte Signal nur in den Übergangsphasen vom Tiefsetzsteller- zum Hochsetzstellerbetrieb benötigt wird, sieht eine andere Ausprägung des Verfahrens vor, dass das Ausgangssignal des Übergangskontrollers in der Weise vorgegeben wird, dass das Tastverhältnis des dritten pulsweitenmodulierten Schaltsignals in Abhängigkeit der Differenz der Eingangsspannung abzüglich der Ausgangsspannung bei abfallender Differenz ab Erreichung eines vorgegeben ersten Grenzwertes der Differenz gleichmäßig ansteigt, bis bei einer Differenz gleich null ein vorgegebenes maximales Tastverhältnis erreicht wird und dass bei zunehmend negativer Differenz das Tastverhältnis wieder gleichmäßig bis zu einem vorgegebenen zweiten Grenzwert der Differenz abnimmt.

Dabei ist es günstig, wenn für den ersten und den zweiten Grenzwert der gleiche Betrag vorgegeben wird.

Für einen störungsfreien Übergang vom Tiefsetzsteller- zum Hochsetzstellerbetrieb hat es sich als vorteilhaft erwiesen, für das maximale Tastverhältnis ungefähr 5-20% vorzugeben. Eine Ansteuerung des zweiten Schaltelements mittels drittem pulsweitenmodulierten Schaltsignal führt also maximal zu einer Einschaltzeit von 5-20% einer Periodendauer. Bevor dieses Tastverhältnis erreicht wird, erfolgt die Ansteuerung des zweiten Schaltelements jedoch wieder mittels zweitem pulsweitenmodulierten Schaltsignal. Das dritte pulsweitenmodulierte Schaltsignal sorgt also ausschließlich während der kurzen Übergangsphase vom Tiefsetzsteller- zum Hochsetzstellerbetrieb für eine Umgehung des Reglers. Damit werden die ansonsten vom Regler verursachten Störungen vermieden, ohne die Regelung in den Phasen mit reinem Tiefsetzsteller- oder Hochsetzstellerbetrieb zu beeinflussen.

Des Weiteren ist es vorteilhaft, wenn für den vorgegebenen Grenzwert bzw. die vorgegebenen Grenzwerte ungefähr 2-10% der maximalen Differenz zwischen Eingangsspannung und Ausgangsspannung vorgegeben wird. Damit ist sichergestellt, dass das zweite Schaltelement mittels drittem pulsweitenmodulierten Schaltsignal früh genug zu takten beginnt, um Störungen in der Übergangsphase vom Tiefsetzsteller- zum Hochsetzstellerbetrieb zu vermeiden. Gleichzeitig wird eine Beeinflussung der Regelung in den übrigen Phasen vermieden.

Für die Regelung des Hoch-Tiefsetzstellers ist es zudem günstig, wenn die zwei gegeneinander versetzten Überlagerungen des Sägezahn- oder Dreiecksignals mit dem Reglerausgangssignal in der Weise ausgeführt werden, dass aus dem Sägezahn- oder Dreiecksignal ein um im Wesentlichen eine Amplitude des Sägezahn- oder Dreiecksignals versetztes weiteres Sägezahn- oder Dreiecksignal gebildet wird. Damit ist eine einfache und effiziente Regelung sichergestellt.

Eine Alternative sieht vor, dass die zwei gegeneinander versetzten Überlagerungen des Sägezahn- oder Dreiecksignals mit dem Reglerausgangssignal in der Weise ausgeführt werden, dass aus dem Reglerausgangssignal ein um im Wesentlichen eine Amplitude des Sägezahn- oder Dreiecksignals versetztes weiteres Reglerausgangssignal gebildet wird.

Zur Durchführung des erfindungsgemäßen Verfahrens ist ein Tief-Hochsetzsteller oder Hoch-Tiefsetzsteller vorgesehen, welcher als Kombination eines Tiefsetzstellers und eines Hochsetzstellers mit einer gemeinsamen Speicherdrossel(in Fall eines Tief-Hochsetzstellers) ausgebildet ist, eine erste und eine zweite Diode sowie ein erstes und ein zweites Schaltelement umfassend, wobei das erste Schaltelement mit einem ersten Pulsbreitenmodulator und das zweite Schaltelement mit einem zweiten Pulsbreitenmodulator verbunden ist und wobei des Weiteren den beiden Pulsbreitenmodulatoren ein Sägezahn- oder Dreieckssignal und ein Reglerausgangssignal zugeführt sind. Dabei ist ein dritter Pulsbreitenmodulator vorgesehen, dem das Sägezahn-oder Dreieckssignal und ein aus der Differenz zwischen Eingangsspannung und Ausgangsspannung abgeleitetes Ausgangssignal eines Übergangskontrollers zugeführt sind und welcher gemeinsam mit dem zweiten Pulsbreitenmodulator über eine Oder-Schaltung mit dem zweiten Schaltelement verbunden ist. Eine derartige Schaltungsanordnung ist in einfacher Weise mit herkömmlichen Schaltungselementen realisierbar.

Die Erfindung wird nachfolgend in beispielhafter Weise unter Bezugnahme auf die beigefügten Figuren erläutert. Es zeigen in schematischer Darstellung:

Fig. B      Schaltungsanordnung

Fig. 9      Funktion des Ausgangssignals des Übergangskontrollers über der Differenz zwischen Ausgangs- und Eingangsspannung

Fig. 10      Alternative Funktion des Ausgangssignals des Übergangskontrollers über der Differenz zwischen Ausgangs- und Eingangsspannung

Fig. 11      Verlauf des dritten pulsweitenmodulierten Schaltsignals bei einer Funktion gemäß Fig. 9 und sich überschneidenden Verläufen der Eingangs- und Ausgangsspannung

Fig. 12      Verlauf des dritten pulsweitenmodulierten Schaltsignals bei einer Funktion gemäß Fig. 9 oder 10 und angenäherten Verläufen der Eingangs- und Ausgangsspannung

Fig. 13      Verlauf des dritten pulsweitenmodulierten Schaltsignals bei einer Funktion gemäß Fig. 10 und sich überschneidenden Verläufen der Eingangs- und Ausgangsspannung

Fig. 14      Verlauf der pulsweitenmodulierten Schaltsignale über der Zeit mit zwei synchronen Sägezahnsignalen

Fig. 15      Verlauf der pulsweitenmodulierten Schaltsignale über der Zeit mit zwei zeitlich versetzten Sägezahnsignalen

Eine beispielhafte Schaltung nach Fig. 1 gliedert sich in einen Leistungsteil und einen Steuerungsteil. Der Leistungsteil ist mit einem Eingangskondensator Ci an eine als Gleichspannung ausgebildete Eingangsspannung $U_{IN}$ geschaltet. Am Ausgang des Leistungsteils liegt an einem Ausgangskondensator Co die Ausgangsspannung $U_{OUT}$ an. Die Bauteile des Leistungsteils bilden abhängig von der Schaltstellung der Schaltelemente $S_{BUCK}$, $S_{BOOST}$ im Zusammenwirken mit einer ersten Diode D1 und eine zweiten Diode D2 sowie einer gemeinsamen Speicherdrossel L entweder eine Tiefsetzsteller oder einen Hochsetzsteller.

Im Tiefsetzstellerbetrieb ist das zweite Schaltelement $S_{BOOST}$ als Bauteil des Hochsetzstellers permanent ausgeschaltet. Das erste Schaltelement $S_{BUCK}$ taktet, wobei mit zunehmendem Tastverhältnis die Ausgangsspannung $U_{OUT}$ von null an die Eingangsspannung $U_{IN}$ angenähert wird.

Beim Übergang vom Tiefsetzsteller- zum Hochsetzstellerbetrieb bleibt das erste Schaltelement $S_{BUCK}$ permanent eingeschaltet und das zweite Schaltelement $S_{BOOST}$ beginnt zu takten, wobei mit zunehmendem Tastverhältnis die Ausgangsspannung $U_{OUT}$ zunehmend über die Eingangsspannung $U_{IN}$ ansteigt.

Dabei ist am Ende der Tiefsetzstellerphase die Spannung in der Speicherdrossel L gleich der Differenz der Eingangsspannung $U_{IN}$ minus der Ausgangsspannung $U_{OUT}$, also nahezu gleich null. Der Strom I beim Einschalten des ersten Schaltelements $S_{BUCK}$ errechnet sich mit der Einschaltzeit $dt_{BUCK}$ des ersten Schaltelements $S_{BUCK}$ und der Drosselinduktivität L wie folgt:

$$I = (U_{IN} - U_{OUT}) * dt_{BUCK} / L$$

Am Anfang der Hochsetzstellerphase ist das erste Schaltelement $S_{BUCK}$ bereits dauerhaft eingeschaltet und somit die Spannung in der Speicherdrossel L gleich der Eingangsspannung $U_{IN}$. Der Strom I beim Einschalten des zweiten Schaltelements $S_{BOOST}$ errechnet sich dann mit der Einschaltzeit $dt_{BOOST}$ des Schaltelements $S_{BOOST}$ nach folgender Formel:

$$I = (U_{IN}) * dt_{BOOST} / L$$

Für eine kontinuierliche Regelung des Schaltwandlers beim Übergang vom Tiefsetzsteller- zum Hochsetzstellerbetrieb und umgekehrt ist deshalb folgende Voraussetzung notwendig:

$$(U_{IN} - U_{OUT}) * dt_{BUCK} / L = (U_{IN}) * dt_{BOOST} / L$$

Das bedeutet, dass die Einschaltzeit $dt_{BOOST}$ des zweiten Schaltelements $S_{BOOST}$ sehr kurz sein muss. Das gilt vor allem dann, wenn der Schaltwandler als Stromquelle betrieben wird, etwa als Bestandteil eines Wechselrichters zur Stromeinspeisung aus einer alternativen Stromquelle in ein Wechselstromnetz. In diesem Fall wird nicht die Ausgangsspannung, sondern der eingespeiste Strom geregelt.

Dabei kommt erschwerend hinzu, dass ein als Netzfilter ausgebildeter Ausgangsfilter eine geringe Ausgangskapazität aufweist und daher Unregelmäßigkeiten beim Übergang der Betriebsarten nicht gedämpft werden. Zudem erfordert die Stromeinspeisung in ein öffentliches Stromnetz eine netzsynchrone Regelung des sinusförmigen Stromes und somit einen entsprechend schnellen Regler. Ein solcher schneller Regler ist nicht dazu geeignet, am Anfang einer Hochsetzstellerphase ausreichend kurze Einschaltzeit $dt_{BOOST}$ des Hochsetzsteller-Schaltelements vorzugeben, weshalb ohne das erfindungsgemäße Verfahren bei jedem Übergang vom Tiefsetzstellers- zum Hochsetzstellerbetrieb und umgekehrt unerwünschte Störungen des eingespeisten Stromes auftreten.

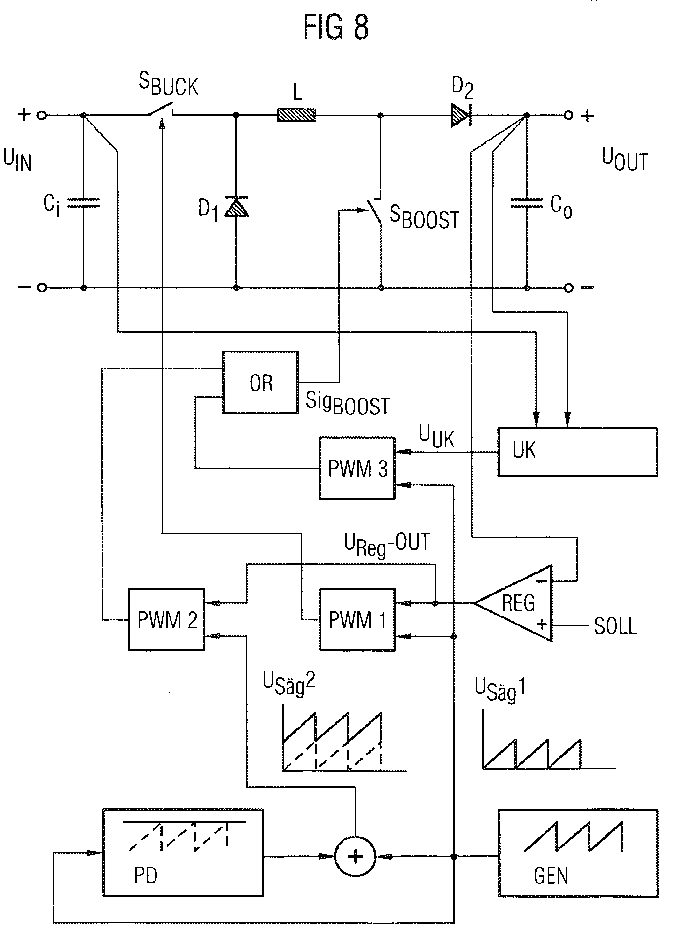

Zur Durchführung des erfindungsgemäßen Verfahrens umfasst der Steuerungsteil des Tief-Hochsetzstellers, wie in Figur 8 beispielhaft dargestellt, einen Regler REG, welchem ein Istwert und ein Sollwert SOLL des Stromes oder der Ausgangsspannung $U_{OUT}$ zugeführt ist. Am Ausgang des Regler REG liegt das Reglerausgangssignal $U_{Reg}$-Out an. Dieses Signal ist einem ersten und dem zweiten Pulsbreitenmodulator PWM 1, PWM 2 zugeführt.

Zudem umfasst der Steuerungsteil einen Signalgenerator GEN zur Erzeugung eines Sägezahnsignals $U_{Säg}1$ bzw. eines Dreiecksignals. Dieses Sägezahnsignal $U_{Säg}1$ ist dem ersten Pulsbreitenmodulator PWM 1 zur Bildung des ersten pulsweitenmodulierten Schaltsignals PWM 1 OUT und einem Spitzendetektor PD zur Erfassung eins Spitzenwertsignals des Sägezahnsignals $U_{Säg}1$ zugeführt. In einem Addierer werden das Sägezahnsignal $U_{Säg}1$ und das Spitzenwertsignal zu einem versetzten Sägezahnsignal $U_{Säg}2$ addiert, welches dem zweiten Pulsbreitenmodulator PWM2 zur Erzeugung des zweiten pulsweitenmodulierten Schaltsignals PWM 2 OUT zugeführt ist.

Mittels erstem pulsweitenmodulierten Schaltsignal PWM 1 OUT wird das erste Schaltelement $S_{BUCK}$ als Bauteil des Tiefsetzstellers direkt angesteuert.

Das zweite pulsweitenmodulierte Schaltsignal PWM 2 OUT ist hingegen nicht direkt dem zweiten Schaltelement $S_{BOOST}$ als Bauteil des Hochsetzstellers zugeführt. Das zweite Schaltelement $S_{BOOST}$ ist mit einem modifizierten Schaltsignal $Sig_{BOOST}$ angesteuert, das mittels einer Oder-Schaltung OR aus dem zweien pulsweitenmodulierten Schaltsignal PWM 2 OUT und einem dritten pulsweitenmodulierten Schaltsignal PWM 3 OUT gebildet wird.

Zur Erzeugung des dritten pulsweitenmodulierten Schaltsignals PWM 3 OUT ist ein dritter Pulsbreitenmodulator PWM 3 vorgesehen, dem das Sägezahnsignal $U_{Säg}1$ und das Ausgangssignal $U_{UK}$ eines Übergangskontrollers UK zugeführt ist.

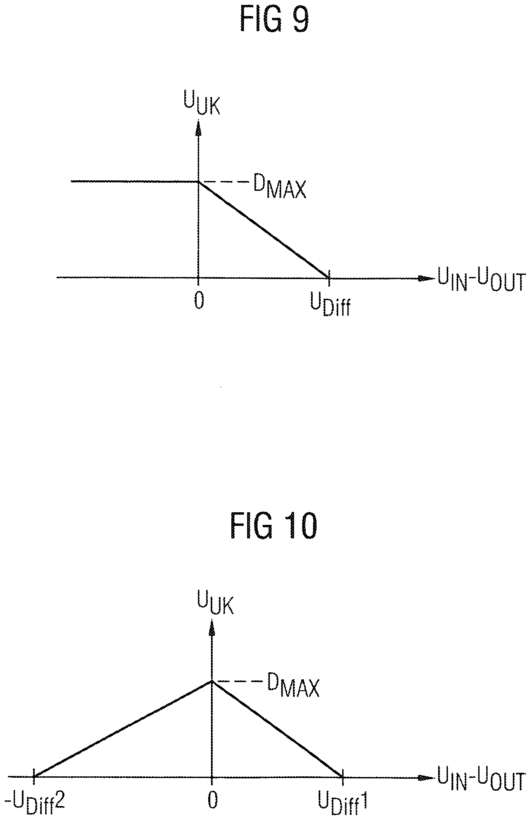

Der Übergangskontroller UK ist zum Beispiel eine Analogschaltung oder ein digitaler Signalprozessor, der eine Funktion des Ausgangssignals $U_{UK}$ über der Differenz zwischen Eingangspannung $U_{IN}$ und Ausgangsspannung $U_{OUT}$ abbildet. In den Figuren 9 und 10 sind zwei Beispiele für eine derartige Funktion dargestellt. Dabei sind auf der Abszisse die Differenz der Eingangsspannung $U_{IN}$ abzüglich der Ausgangsspannung $U_{OUT}$ und auf der Ordinate das Ausgangssignal $U_{UK}$ aufgetragen.

Im ersten Beispiel (Figur 9) beginnt das Ausgangssignal $U_{UK}$ ab einem vorgegebenen positiven Grenzwert $U_{Diff}$ der Differenz mit abnehmender Differenz linear anzusteigen, bis bei einer Differenz gleich null ein maximaler Wert $D_{Max}$ des Ausgangssignals $U_{UK}$ erreicht ist. Wird die Differenz negativ, bleibt das Ausgangssignal $U_{UK}$ auf diesem maximalen Wert $D_{Max}$ konstant.

Die zweite beispielhafte Funktion (Figur 10) unterscheidet sich von der ersten dadurch, dass das Ausgangssignal $U_{UK}$ mit fortschreitend negativer Differenz wieder linear bis zu einem zweiten Grenzwert $-U_{Diff}2$ auf der Abszisse abfällt. Der erste und der zweiten Grenzwert $U_{Diff}1$, $-U_{Diff}2$ weisen dabei entweder gleiche oder, wie in Figur 10 dargestellt, unterschiedliche Beträge auf.

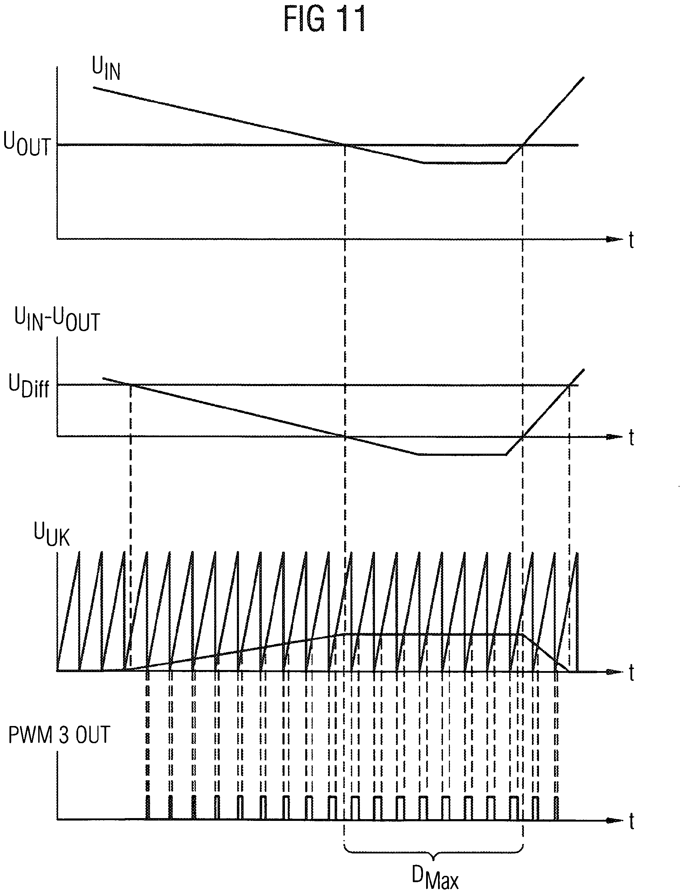

Die Figuren 11, 12 und 13 zeigen den Verlauf des Ausgangssignals $U_{UK}$ über der Zeit t. Dem in Figur 11 dargestellten Verlauf liegt eine Funktion gemäß Figur 9 zugrunde. Dabei ist im obersten Diagramm ein beispielhafter Verlauf der Eingangsspannung $U_{IN}$ und der Ausgangsspannung $U_{OUT}$ eingezeichnet. Die Ausgangsspannung $U_{OUT}$ bleibt konstant. Die Eingangsspannung $U_{IN}$ nähert sich von einem höheren Wert aus der Ausgangsspannung $U_{OUT}$ an, fällt unter diese ab und steigt dann wieder über die Ausgangsspannung $U_{OUT}$ an. Das zweite Diagramm zeigt den Verlauf der Differenz der Eingangsspannung $U_{IN}$ abzüglich der Ausgangsspannung $U_{OUT}$ und des vorgegebenen Grenzwertes $U_{Diff}$ der Differenz. Die Differenz nimmt mit abfallender Eingangsspannung $U_{IN}$ bis zum Wert null ab. Im Bereich, in welchem die Eingangsspannung $U_{IN}$ geringer als die Ausgangsspannung $U_{OUT}$ ist, wird die Differenz negativ. Mit ansteigender Eingangsspannung $U_{IN}$ steigt auch die Differenz wieder an.

Die Übereinstimmungspunkte der Verläufe der Differenz und des Grenzwertes $U_{Diff}$ markieren den Anfang und das Ende des Verlaufes des Ausgangssignals $U_{UK}$ des Übergangskontrollers UK.

Das dritte Diagramm zeigt die Verläufe des Ausgangssignals $U_{UK}$ und des Sägezahnsignals $U_{Säg}1$, welche dem dritten Pulsbreitenmodulator PWM 3 zugeführt sind. Entsprechend der in Figur 9 dargestellten Funktion steigt das Ausgangssignal $U_{UK}$ mit abnehmender Differenz bis zum Erreichen einer Differenz gleich null auf einen Maximalwert $D_{Max}$ an. Im Bereich einer negativen Differenz bleibt das Ausgangssignal konstant, um dann wieder mit größer werdender positiver Differenz bis auf den Wert Null abzufallen.

Das sich aus der Überlagerung des Ausgangssignals $U_{UK}$ und des Sägezahnsignals $U_{Säg}1$ ergebende dritte pulsweitenmodulierte Schaltsignal PWM 3 OUT ist im vierten Diagramm dargestellt.

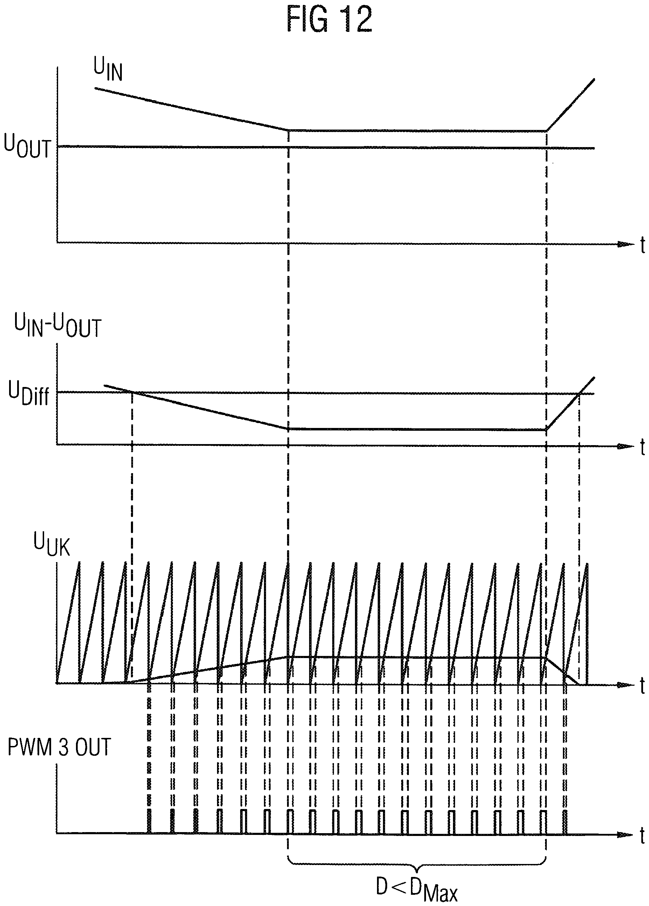

Die Diagramme in Figur 12 unterscheiden sich von jenen in Figur 11 dadurch, dass sich die Eingangsspannung $U_{IN}$ nur an die Ausgangsspannung $U_{OUT}$ annähert, ohne dabei unter diese abzufallen. Der Verlauf der Differenz zwischen Eingangsspannung $U_{IN}$ und Ausgangsspannung $U_{OUT}$ schneidet jedoch den Verlauf des Grenzwertes $U_{Diff}$, wie im zweiten Diagramm dargestellt. Die Schnittpunkte markieren dabei wieder den Anfang und das Ende des Verlaufes des Ausgangssignals $U_{UK}$ des Übergangskontrollers UK. Dabei steigt das Ausgangssignal $U_{UK}$ nur bis zu einem Wert D an, der kleiner als der Maximalwert $D_{MAX}$ ist.

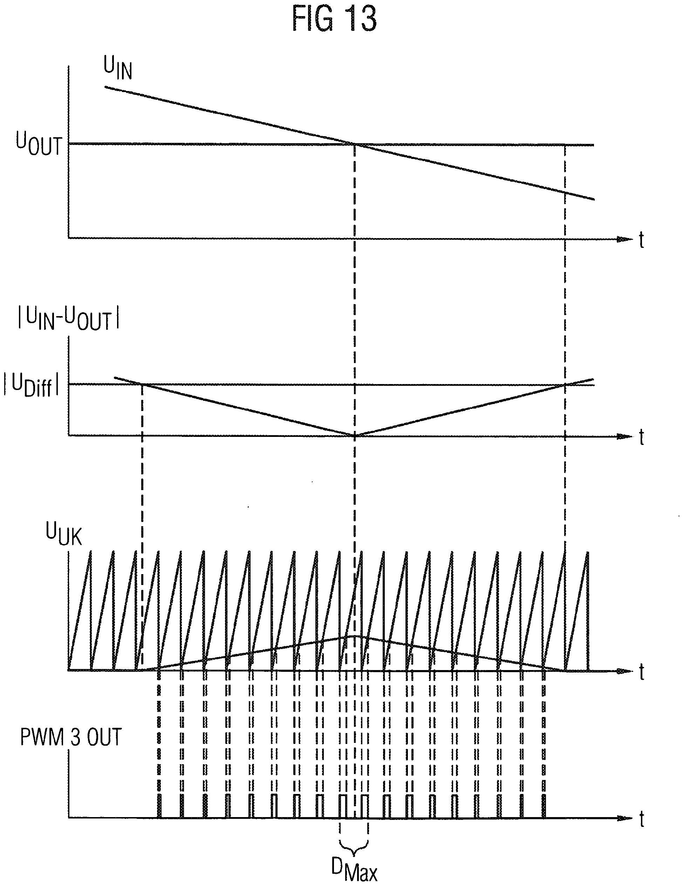

Den Diagrammen in Figur 13 ist die Funktion gemäß Figur 10 zugrunde gelegt, wobei für die beiden Grenzwerte $U_{Diff}1$ und $-U_{Diff}2$ der gleiche Betrag $|U_{Diff}|$ vorgegeben ist. Die Ausgangsspannung $U_{OUT}$ bleibt wieder konstant, wohingegen die Eingangsspannung $U_{IN}$ linear abfällt und dabei den Wert der Ausgangsspannung $U_{OUT}$ durchläuft. Der im zweiten Diagramm dargestellte Verlauf des Betrages der Differenz fällt demnach mit sinkender Eingangsspannung bis zum Wert Null bei Übereinstimmung der Eingangsspannung mit der Ausgangsspannung, um bei weiter sinkender Eingangsspannung wieder anzusteigen.

Die Übereinstimmungspunkte der Verläufe des Betrages der Differenz und des Betrages $|U_{Diff}|$ der Grenzwerte $U_{Diff}1$, $-U_{Diff}2$ markieren dabei den Anfang und das Ende des im dritten Diagramm dargestellten Ausgangssignals $U_{UK}$ des Übergangskontrollers UK. Das Ausgangssignal $U_{UK}$ errecht dabei nur in dem Punkt, in dem die Differenz gleich null ist, seinen Maximalwert $D_{Max}$. Demnach werden nur ein oder zwei Schaltimpulse des dritten pulsweitenmodulierten Signals PWM 3 OUT mit einem Tastverhältnis entsprechend diesem Maximalwert $D_{Max}$ erzeugt.

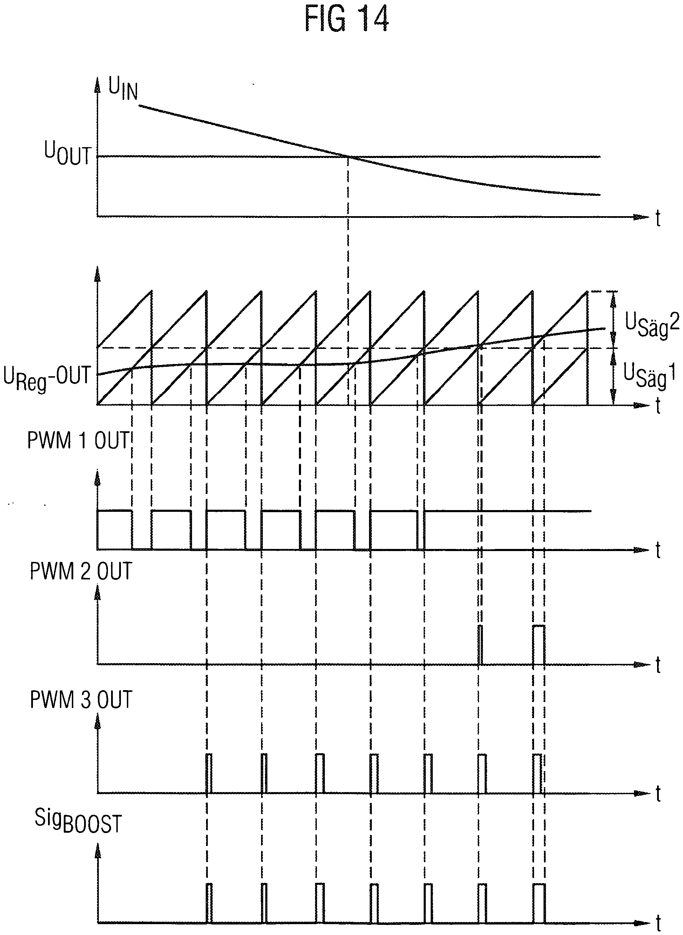

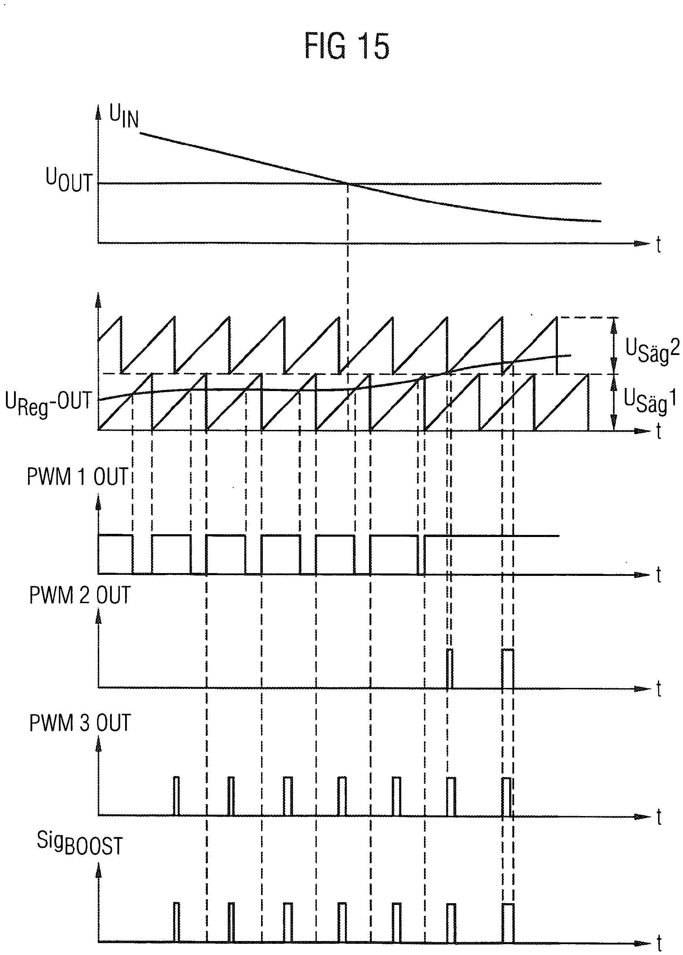

In den Figuren 14 und 15 sind wieder in einem ersten Diagramm die Verläufe der Eingangsspannung $U_{IN}$ und der Ausgangsspannung $U_{OUT}$ über der Zeit t dargestellt. Die abfallende Eingangsspannung $U_{IN}$ durchläuft dabei den Wert der konstanten Ausgangsspannung $U_{OUT}$.

Das zweite Diagramm zeigt die Sägezahnsignale $U_{Säg}1$, $U_{Säg}2$, wobei in der Figur 15 diese zeitlich versetzt dargestellt sind. Aus der Überschneidung der Sägezahnsignale $U_{Säg}1$, $U_{Säg}2$ mit dem Reglerausgangssignal $U_{Reg}$-Out werden das erste und das zweite pulsweitenmodulierte Signal PWM 1 OUT, PWM 2 OUT gebildet, welche im dritten und vierten Diagramm dargestellt sind.

Das fünfte Diagramm zeigt das dritte pulsweitenmodulierte Signal PWM 3 OUT, wobei zu beachten ist, dass dieses immer mit einem Sägezahnsignal bzw. Dreieckssignal gebildet wird, welches synchron zu jenem ist, das zur Bildung des zweiten pulsweitenmodulierten Signals PWM 2 OUT verwendet wird. Dementsprechend beginnen die ansteigenden Flanken der ersten Schaltimpulse des zweiten pulsweitenmodulierten Signals PWM 2 OUT immer zeitgleich mit jenen des dritten pulsweitenmodulierten Signals PWM 3 OUT.

Am Ausgang der Oder-Schaltung OR liegt das im sechsten Diagramm dargestellte modifizierte Schaltsignal $Sig_{BOOST}$ an. Dieses Signal entspricht so lange dem dritten pulsweitenmodulierten Schaltsignal PWM 3 OUT, bis die Dauer der Schaltimpulse kürzer als jene des synchron verlaufenden zweiten pulsweitenmodulierten Schaltsignals PWM 2 OUT werden. Ab diesem Zeitpunkt entspricht das modifizierte Schaltsignal $Sig_{BOOST}$ dem zweiten pulsweitenmodulierten Schaltsignal PWM 2 OUT.

Das dritte pulsweitenmodulierte Schaltsignal PWM 3 OUT wird also nur dann zur Ansteuerung des zweiten Schaltelements $S_{BOOST}$ herangezogen, wenn die Differenz zwischen Eingangsspannung $U_{IN}$ und Ausgangsspannung $U_{OUT}$ unter den Grenzwert $U_{Diff}$ der Differenz abfällt und das zweite pulsweitenmodulierte Schaltsignal PWM 2 OUT noch keine Einschaltzeiten liefert, welche jene des dritten pulsweitenmodulierten Schaltsignals PWM 3 OUT übersteigen.

Die Steuerung des zweiten Schaltelements $S_{BOOST}$ unter Einbeziehung des Übergangskontrollers UK erfolgt somit nur in den kurzen Phasen des Übergangs vom Tiefsetzsteller- zum Hochsetzstellerbetrieb oder umgekehrt, ohne die Regelung weiter zu beeinflussen.

**Patentansprüche**

1. Verfahren zur Regelung eines Tief-Hochsetzstellers oder Hoch-Tiefsetzstellers, wobei mittels eines ersten pulsweitenmodulierten Schaltsignals (PWM 1 OUT) ein erstes Schaltelement ($S_{BUCK}$) als ein Bauteil des Tiefsetzstellers angesteuert wird und wobei mittels eines zweiten pulsweitenmodulierten Schaltsignals (PWM 2 OUT) ein zweites Schaltelement ($S_{BOOST}$) als ein Bauteil des Hochsetzstellers angesteuert wird, sodass eine Eingangsspannung ($U_{IN}$) in eine Ausgangsspannung ($U_{OUT}$) umgewandelt wird, wobei sich die Verläufe der Eingangspannung ($U_{IN}$) und der Ausgangspannung ($U_{OUT}$) laufend einander annähern oder überschneiden,
**dadurch gekennzeichnet, dass**
dem zweiten pulsweitenmodulierten Schaltsignal (PWM 2 OUT) bei einer Annäherung der Ausgangsspannung ($U_{OUT}$) an die größere Eingangsspannung ($U_{IN}$) ein synchrones drittes pulsweitenmoduliertes Schaltsignal (PWM 3 OUT) mit einem aus der Differenz zwischen Eingangsspannung ($U_{IN}$) und Ausgangsspannung ($U_{OUT}$) abgeleiteten, ansteigenden Tastverhältnis in der Weise überlagert wird, dass das zweite Schaltelement ($S_{BOOST}$) bereits zu takten beginnt, wenn das erste Schaltelement ($S_{BUCK}$) noch taktet und das zweite pulsweitenmodulierte Schaltsignal (PWM 2 OUT) noch ein Tastverhältnis gleich null aufweist.

2. Verfahren nach Anspruch 1, **dadurch gekennzeichnet, dass** das erste und das zweite pulsweitenmodulierte Schaltsignal (PWM 1 OUT, PWM 2 OUT) durch zwei gegeneinander versetzte Überlagerungen eines Sägezahn- oder Dreiecksignals ($U_{Säg}$ bzw. $U_{Säg}1$, $U_{Säg}2$) mit einem Reglerausgangssignal ($U_{Reg}$-OUT bzw. $U_{Reg}1$-OUT, $U_{Reg}2$-OUT) erzeugt werden und dass das dritte pulsweitenmodulierte Schaltsignal (PWM 3 OUT) durch Überlagerung des Sägezahn- oder Dreiecksignals ($U_{Säg}$ bzw. $U_{Säg}1$, $U_{Säg}2$) mit einem Ausgangssignal ($U_{UK}$) eines Übergangskontrollers (UK) erzeugt wird.

3. Verfahren nach Anspruch 2, **dadurch gekennzeichnet, dass** das Ausgangssignal ($U_{UK}$) des Übergangskontrollers (UK) in der Weise vorgegeben wird, dass das Tastverhältnis des dritten pulsweitenmodulierten Schaltsignals (PWM 3 OUT) in Abhängigkeit der Differenz der Eingangsspannung ($U_{IN}$) abzüglich der Ausgangsspannung ($U_{OUT}$) bei abfallender Differenz ab Erreichung eines vorgegeben Grenzwertes ($U_{Diff}$) der Differenz gleichmäßig ansteigt, bis bei einer Differenz gleich null ein vorgegebenes maximales Tastverhältnis erreicht wird und dass bei einer negativen Differenz das Tastverhältnis des dritten pulsweitenmodulierten Schaltsignals (PWM 3 OUT) konstant bleibt.

4. Verfahren nach Anspruch 2, **dadurch gekennzeichnet, dass** das Ausgangssignal ($U_{UK}$) des Übergangskontrollers (UK) in der Weise vorgegeben wird, dass das Tastverhältnis des dritten pulsweitenmodulierten Schaltsignals (PWM 3 OUT) in Abhängigkeit der Differenz der Eingangsspannung (U$_{IN}$) abzüglich der Ausgangsspannung (U$_{OUT}$) bei abfallender Differenz ab Erreichung eines vorgegeben ersten Grenzwertes (U$_{Diff}$1) der Differenz gleichmäßig ansteigt, bis bei einer Differenz gleich null ein vorgegebenes maximales Tastverhältnis erreicht wird und dass bei zunehmend negativer Differenz das Tastverhältnis wieder gleichmäßig bis zu einem vorgegebenen zweiten Grenzwert (-U$_{Diff}$2) der Differenz abnimmt.

5. Verfahren nach Anspruch 4, **dadurch gekennzeichnet, dass** für den ersten und den zweiten Grenzwert (U$_{Diff}$1, -U$_{Diff}$2) der gleiche Betrag vorgegeben wird.

6. Verfahren nach einem der Ansprüche 3 bis 5, **dadurch gekennzeichnet, dass** als vorgegebenes maximales Tastverhältnis ungefähr 5-20% vorgegeben wird.

7. Verfahren nach einem der Ansprüche 3 bis 6, **dadurch gekennzeichnet, dass** für den vorgegebenen Grenzwert (U$_{Diff}$) bzw. die vorgegebenen Grenzwerte (U$_{Diff}$1, -U$_{Diff}$2) ungefähr 2-10% der maximalen Differenz zwischen Eingangsspannung (U$_{IN}$) und Ausgangsspannung (U$_{OUT}$) vorgegeben wird.

8. Verfahren nach einem der Ansprüche 2 bis 7, **dadurch gekennzeichnet, dass** die zwei gegeneinander versetzten Überlagerungen des Sägezahn- oder Dreiecksignals (U$_{Säg}$1) mit dem Reglerausgangssignal (U$_{Reg}$-OUT) in der Weise ausgeführt werden, dass aus dem Sägezahn- oder Dreiecksignal (U$_{Säg}$1) ein um im Wesentlichen eine Amplitude des Sägezahn- oder Dreiecksignals (U$_{Säg}$1) versetztes weiteres Sägezahn- oder Dreiecksignal (U$_{Säg}$2) gebildet wird.

9. Verfahren nach einem der Ansprüche 2 bis 7, **dadurch gekennzeichnet, dass**, die zwei gegeneinander versetzten Überlagerungen des Sägezahn- oder Dreiecksignals (U$_{Säg}$1) mit dem Reglerausgangssignal (U$_{Reg}$1-OUT) in der Weise ausgeführt werden, dass aus dem Reglerausgangssignal (U$_{Reg}$1-OUT) ein um im Wesentlichen eine Amplitude des Sägezahn- oder Dreiecksignals (U$_{Säg}$1) versetztes weiteres Reglerausgangssignal (U$_{Reg}$2-OUT) gebildet wird.

10. Tief-Hochsetzsteller oder Hoch-Tiefsetzsteller, welcher als kombination eines Tiefsetzstellers und eines Hochsetzstellers mit zumindest einer Speicherdrossel (L) ausgebildet ist, eine erste und eine zweite Diode (D1, D2) sowie ein erstes und ein zweites Schaltelement (S$_{BUCK}$, S$_{BOOST}$) umfassend, wobei das erste Schaltelement (S$_{BUCK}$) mit einem ersten Pulsbreitenmodulator (PWM 1) und das zweite Schaltelement (S$_{BOOST}$) mit einem zweiten Pulsbreitenmodulator (PWM 2) verbunden ist und wobei des Weiteren den beiden Pulsbreitenmodulatoren (PWM 1, PWM 2) ein Sägezahn- oder Dreieckssignal (U$_{Säg}$ bzw. U$_{Säg}$1, U$_{Säg}$2) und ein Reglerausgangssignal (U$_{Reg}$-OUT bzw. U$_{Reg}$1-OUT, U$_{Reg}$2-OUT) zugeführt sind, **dadurch gekennzeichnet, dass** ein dritter Pulsbreitenmodulator (PWM 3) vorgesehen ist, dem das Sägezahn- oder Dreieckssignal (U$_{Säg}$ bzw. U$_{Säg}$1, U$_{Säg}$2) und ein aus der Differenz zwischen Eingangsspannung (U$_{IN}$) und Ausgangsspannung (U$_{OUT}$) abgeleitetes Ausgangssignal (U$_{UK}$) eines Übergangskontrollers (UK) zugeführt sind und welcher gemeinsam mit dem zweiten Pulsbreitenmodulator (PWM 2) über eine Oder-Schaltung (OR) mit dem zweiten Schaltelement (S$_{BOOST}$) verbunden ist.

**Claims**

1. Method for regulating a buck-boost converter or boost-buck converter, wherein a first switching element (S$_{BUCK}$), as a component of the buck converter, is driven by means of a first pulse-width-modulated switching signal (PWM 1 OUT) and wherein a second switching element (S$_{BOOST}$), as a component of the boost converter, is driven by means of a second pulse-width-modulated switching signal (PWM 2 OUT) such that an input voltage (U$_{IN}$) is converted into an output voltage (U$_{OUT}$) wherein the waveforms of the input voltage (U$_{IN}$) and the output voltage (U$_{OUT}$) constantly approach each other or overlap, **characterised in that**

as the output voltage (U$_{OUT}$) approaches the greater input voltage (U$_{IN}$) the second pulse-width-modulated switching signal (PWM 2 OUT) is overlaid by a synchronous third pulse-width-modulated switching signal (PWM 3 OUT) with an increasing duty cycle derived from the difference between input voltage (U$_{IN}$) and output voltage (U$_{OUT}$) in such a way that the second switching element (S$_{BOOST}$) already starts to clock while the first switching element (S$_{BUCK}$) is still clocking and the second pulse-width-modulated switching signal (PWM 2 OUT) still has a duty cycle equal to zero.

2. Method according to claim 1, **characterised in that** the first and the second pulse-width-modulated switching signal (PWM 1 OUT, PWM 2 OUT) are generated by means of two overlays, offset relative to each other, of a sawtooth waveform or triangular waveform signal ($U_{Säg}$ or $U_{Säg}1$, $U_{Säg}2$) by a regulator output signal ($U_{Reg}$-OUT or $U_{Reg}1$-OUT, $U_{Reg}2$-OUT) and **in that** the third pulse-width-modulated switching signal (PWM 3 OUT) is generated by means of an overlaying of the sawtooth waveform or triangular waveform signal ($U_{Säg}$ or $U_{Säg}1$, $U_{Säg}2$) by an output signal ($U_{UK}$) of a transition controller (UK).

3.  Method according to claim 2, **characterised in that** the output signal ($U_{UK}$) of the transition controller (UK) is specified in such a way that the duty cycle of the third pulse-width-modulated switching signal (PWM 3 OUT) increases uniformly as a function of the difference of the input voltage ($U_{IN}$) minus the output voltage ($U_{OUT}$) with decreasing difference as of reaching a predefined limit value ($U_{Diff}$) of the difference until at a difference equal to zero a predefined maximum duty cycle is reached and **in that** if the difference is negative the duty cycle of the third pulse-width-modulated switching signal (PWM 3 OUT) remains constant.

4.  Method according to claim 2, **characterised in that** the output signal ($U_{UK}$) of the transition controller (UK) is specified in such a way that the duty cycle of the third pulse-width-modulated switching signal (PWM 3 OUT) uniformly increases as a function of the difference of the input voltage ($U_{IN}$) minus the output voltage ($U_{OUT}$) with decreasing difference as of reaching a predefined first limit value ($U_{Diff}1$) of the difference until at a difference equal to zero a predefined maximum duty cycle is reached and **in that** if the difference is increasingly negative the duty cycle uniformly decreases again up to a predefined second limit value ($-U_{Diff}2$) of the difference.

5.  Method according to claim 4, **characterised in that** the same amount is specified for the first and the second limit value ($U_{Diff}1$, $-U_{Diff}2$).

6.  Method according to one of claims 3 to 5, **characterised in that** approximately 5-20% is specified as the predefined maximum duty cycle.

7.  Method according to one of claims 3 to 6, **characterised in that** approximately 2-10% of the maximum difference between input voltage ($U_{IN}$) and output voltage ($U_{OUT}$) is specified for the predefined limit value ($U_{Diff}$) or the predefined limit values ($U_{Diff}1$, $-U_{Diff}2$).

8.  Method according to one of claims 2 to 7, **characterised in that** the two overlays, offset relative to each other, of the sawtooth waveform or triangular waveform signal ($U_{Säg}1$) by the regulator output signal ($U_{Reg}$-OUT) are implemented in such a way that a further sawtooth waveform or triangular waveform signal ($U_{Säg}2$) that is offset essentially by an amplitude of the sawtooth waveform or triangular waveform signal ($U_{Säg}1$) is formed from the sawtooth waveform or triangular waveform signal ($U_{Säg}1$).

9.  Method according to one of claims 2 to 7, **characterised in that** the two overlays, offset relative to each other, of the sawtooth waveform or triangular waveform signal ($U_{Säg}1$) by the regulator output signal ($U_{Reg}1$-OUT) are implemented in such a way that a further regulator output signal ($U_{Reg}2$-OUT) that is offset essentially by an amplitude of the sawtooth waveform or triangular waveform signal ($U_{Säg}1$) is formed from the regulator output signal ($U_{Reg}1$-OUT).

10. Buck-boost converter or boost-buck converter which is embodied as a combination of a buck converter and a boost converter having at least one inductor (L), a first and a second diode (D1, D2) and a first and a second switching element ($S_{BUCK}$, $S_{BOOST}$), wherein the first switching element ($S_{BUCK}$) is connected to a first pulse width modulator (PWM 1) and the second switching element ($S_{BOOST}$) is connected to a second pulse width modulator (PWM 2) and wherein in addition a sawtooth waveform or triangular waveform signal ($U_{Säg}$ or $U_{Säg}1$, $U_{Säg}2$) and a regulator output signal ($U_{Reg}$-OUT or $U_{Reg}1$-OUT, $U_{Reg}2$-OUT) are supplied to the two pulse width modulators (PWM 1, PWM 2), **characterised in that** a third pulse width modulator (PWM 3) is provided to which are supplied the sawtooth waveform or triangular waveform signal ($U_{Säg}$ or $U_{Säg}1$, $U_{Säg}2$) and an output signal ($U_{UK}$) of a transition controller (UK) derived from the difference between input voltage ($U_{IN}$) and output voltage ($U_{OUT}$) and which is connected together with the second pulse width modulator (PWM 2) to the second switching element ($S_{BOOST}$) via an OR circuit (OR).

**Revendications**

1.  Procédé de régulation d'un dévolteur-survolteur ou d'un survolteur-dévolteur, dans lequel, au moyen d'un signal (PWM 1 OUT) de commutation à modulation de largeur d'impulsion, on commande un premier élément ( SBUCK ) de commutation comme composant du dévolteur et dans lequel, au moyen d'un deuxième signal ( PWM 2 OUT ) de commutation à modulation de largeur d'impulsion, on commande un deuxième élément ( SBOOST ) de commutation comme composant du survolteur, de manière à transformer une tension ( UIN ) d'entrée en une tension ( UOUT ) de sortie, les courbes de la tension ( UIN ) d'entrée et de la tension ( UOUT ) de sortie se rapprochant l'une de l'autre d'une manière continue ou se coupant,

**caractérisé en ce qu'**

au signal ( PWM 2 OUT ) de commutation à modulation de largeur d'impulsion se superpose, lorsque la tension ( UOUT ) de sortie se rapproche de la tension ( UIN ) d'entrée la plus grande, un troisième signal ( PWM 3 OUT ) de commutation synchrone, à modulation de largeur d'impulsion, ayant un rapport de cycle croissant, déduit de la différence entre la tension ( UIN ) d'entrée et la tension ( UOUT ) de sortie, de manière à ce que le deuxième élément ( SBOOST ) de commutation commence déjà à synchroniser, lorsque le premier élément ( SBUCK ) de commutation ne synchronise pas encore et de manière à ce que le deuxième signal ( PWM 2 OUT ) de commutation à modulation de largeur d'impulsion ait encore un rapport de cycle égal à zéro.

2. Procédé suivant la revendication 1, **caractérisé en ce que** le premier et le deuxième signal ( PWM 1 OUT, PWM 2 OUT ) de commutation à modulation de largeur d'impulsion sont produits par deux superpositions décalées dans le temps d'un signal ( USag ou USag1, USag2 ) en dent de scie ou triangulaire avec un signal ( UReg-OUT ou UReg1-OUT, UReg2-OUT ) de sortie de régulateur et **en ce que** le troisième signal ( PWM 3 OUT ) de commutation à modulation de largeur d'impulsion est produit par superposition du signal ( USag ou USag1, USag2 ) en dent de scie ou triangulaire avec un signal ( UUK ) de sortie d'un contrôleur ( UK ) de transition.

3. Procédé suivant la revendication 2, **caractérisé en ce que** le signal ( UUK ) de sortie du contrôleur ( UK ) de transition est prescrit de façon à ce que le rapport de cycle du troisième signal ( PWM 3 OUT ) de commutation à modulation de largeur d'impulsion augmente uniformément en fonction de la différence de la tension ( UIN ) d'entrée diminuée de la tension ( UOUT ) de sortie, pour une différence décroissante, à partir d'une valeur ( UDiff ) limite prescrite de la différence, jusqu'à ce que, pour une différence égale à zéro, un rapport de cycle maximum prescrit soit atteint et **en ce que**, pour une différence négative du rapport de cycle, le troisième signal ( PWM 3 OUT ) de commutation à modulation de largeur d'impulsion reste constant.

4. Procédé suivant la revendication 2, **caractérisé en ce que** le signal ( UUK ) de sortie du contrôleur ( UK ) de transition est prescrit de manière à ce que le rapport de cycle du troisième signal ( PWM 3 OUT ) de commutation à modulation de largeur d'impulsion augmente uniformément en fonction de la différence de la tension ( UIN ) d'entrée diminuée de la tension ( UOUT ) de sortie, pour une différence décroissante, à partir d'une première valeur ( UDiff1 ) limite prescrite de la différence, jusqu'à ce que, pour une différence égale à zéro, un rapport de cycle maximum prescrit soit atteint et **en ce que**, pour une différence négative croissante, le rapport de cycle diminue à nouveau jusqu'à une deuxième valeur ( -UDiff2 ) limite prescrite de la différence.

5. Procédé suivant la revendication 4, **caractérisé en ce qu'**on prescrit la même valeur absolue pour la première et la deuxième valeurs ( UDiff1, -UDiff2 ) limites.

6. Procédé suivant l'une des revendications 3 à 5, **caractérisé en ce que** l'on prescrit comme rapport de cycle maximum prescrit environ 5 à 20%.

7. Procédé suivant l'une des revendications 3 à 6, **caractérisé en ce que** pour la valeur ( UDiff ) limite prescrite ou pour les valeurs ( UDiff1, -UDiff2 ) limites prescrites, on prescrit à peu près 2 à 10% de la différence maximum entre la tension ( UIN ) d'entrée et la tension ( UOUT ) de sortie.

8. Procédé suivant l'une des revendications 2 à 7, **caractérisé en ce que** les deux superpositions, décalées l'une par rapport à l'autre du signal ( USag1 ) en dent de scie ou triangulaire avec le signal ( UReg-OUT ) de sortie du régulateur, sont réalisées de manière à former à partir du signal ( USag1 ) un autre signal ( USag2 ) en dent de scie ou triangulaire, décalé sensiblement d'une amplitude du signal ( USag1 ) en dent de scie ou triangulaire.

9. Procédé suivant l'une des revendications 2 à 7, **caractérisé en ce que** les deux superpositions, décalées l'une par rapport à l'autre du signal ( USag1 ) en dent de scie ou triangulaire avec le signal ( UReg1-OUT ) de sortie du régulateur, sont réalisées de manière à former à partir du signal ( UReg1-OUT ) de sortie du régulateur un autre signal ( UReg2-OUT ) de sortie du régulateur décalé de sensiblement une amplitude du signal ( USag1 ) en dent de scie ou triangulaire.

**10.** Dévolteur-survolteur ou survolteur-dévolteur, qui est formé d'une combinaison d'un dévolteur et d'un survolteur ayant au moins une bobine ( L ) accumulatrice, comprenant une première et une deuxième diodes ( D1, D2 ), ainsi qu'un premier et un deuxième éléments ( SBUCK, SBOOST ) de commutation, le premier élément ( SBUCK ) de commutation étant relié à un premier modulateur ( PWM 1 ) de largeur d'impulsion et le deuxième élément ( SBOOST ) de commutation à un deuxième modulateur ( PWM 2 ) de largeur d'impulsion et dans lequel il est envoyé en outre aux deux modulateurs ( PWM 1, PWM 2 ) de largeur d'impulsion un signal ( USag ou USag1, USag2 ) en dent de scie ou triangulaire et un signal ( UReg-OUT ou UReg1-OUT, UReg2-OUT ) de sortie de régulateur, **caractérisé en ce qu'**il est prévu un troisième modulateur ( PWM 3 ) de largeur d'impulsion, auquel sont envoyés le signal ( USag ou USag1, USag2 ) en dent de scie ou triangulaire et un signal ( UUK ) de sortie d'un contrôleur ( UK ) de transition, déduit de la différence entre une tension ( UIN ) d'entrée et une tension ( UOUT ) de sortie et qui, conjointement avec le deuxième modulateur ( PWM 2 ) de largeur d'impulsion, est relié au deuxième élément ( SBOOST ) de commutation par un circuit OU ( OR ).

# FIG 1
## Stand der Technik

# FIG 2
## Stand der Technik

# FIG 3
## Stand der Technik

# FIG 4
## Stand der Technik

PWM 1 IN
PWM 2 IN

$U_{Säg}2$

$U_{Säg}1$

$U_{Reg}$-OUT

PWM 2 OUT

PWM 1 OUT

# FIG 5
## Stand der Technik

PWM 1 IN
PWM 2 IN

$U_{Säg}2$

$U_{Reg}$-OUT

$U_{Säg}1$

PWM 2 OUT

PWM 1 OUT

# FIG 6
## Stand der Technik

# FIG 7
## Stand der Technik

PWM 1 IN
PWM 2 IN

$U_{Reg}1$-OUT

$U_{Säg}$

$U_{Reg}2$-OUT

PWM 2 OUT

PWM 1 OUT

# FIG 8

# FIG 9

# FIG 10

# FIG 11

FIG 12

# FIG 13

# FIG 14

# FIG 15

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- WO 1998009368 A
- DE 102005030599 A1
- DE 4306070 C1
- US 6166527 A
- US 2005007089 A1
- US 6037755 A
- EP 1361649 A1